# NEUE EUROPÄISCHE PATENTSCHRIFT

(11) **EP 0 783 548 B2**
(45) Veröffentlichungstag und Bekanntmachung des Hinweises auf die Entscheidung über den Einspruch: **28.11.2001**
(45) Hinweis auf die Patenterteilung: 08.04.1998
(21) Anmeldenummer: 95933379.0
(22) Anmeldetag: 16.09.1995
(51) Int. Cl.: C09D 5/44

(54) **VERFAHREN ZUR HERSTELLUNG EINER KORROSIONSSCHÜTZENDEN, GUT HAFTENDEN LACKIERUNG UND DIE DABEI ERHALTENEN WERKSTÜCKE**
PROCESS FOR PRODUCING A COATING WHICH PROTECTS AGAINST CORROSION AND HAS GOOD ADHESION, AND THE WORKPIECES THUS OBTAINED
PROCEDE DE PRODUCTION D'UN REVETEMENT ANTICORROSION, A FORTE ADHERENCE, ET PIECES AINSI REVETUES

(30) Priorität: 28.09.1994 DE 4434593
(43) Veröffentlichungstag der Anmeldung: 16.07.1997
(73) Patentinhaber: E.I. DU PONT DE NEMOURS AND COMPANY, Wilmington Delaware 19898 (US)
(72) Erfinder: BLUM, Joachim, D-42855 Remscheid (DE); KÜHHIRT, Walter, D-42857 Remscheid (DE); KIMPEL, Matthias, D-58332 Schwelm (DE); KLEIN, Klausjörg, D-42289 Wuppertal (DE)
(74) Vertreter: Hrabal, Ulrich, Dr.
(86) Internationale Anmeldenummer: EP9503648
(87) Internationale Veröffentlichungsnummer: WO9610057

(56) Entgegenhaltungen:
- EP-A- 0 138 193
- EP-A- 0 509 437
- WO-A-93/24578
- WO-A-95/07319
- DE-A- 4 330 002
- JOT 1992, Heft 9, Seiten 68-74: P. KURZMANN "Die Vorbehandlung im anspruchsvollen PKW-Bereich"

## Beschreibung

Die Erfindung betrifft ein Verfahren zum Beschichten von metallischen Substraten sowie die dabei erhaltenen Werkstücke.

Die Vorbehandlung metallischer Substrate für eine elektrophoretisch zu applizierende Tauchlackierung besteht, wenn ein hervorragender Korrosionsschutz erwünscht ist und eine gute Substrathaftung der durch elektrophoretische Abscheidung erzeugten Lackschicht erreicht werden soll, aus einer Phosphatierung und einer passivierenden Nachspülung. Auf diese Oberfläche wird dann der Elektrotauchlacküberzug appliziert und eingebrannt.

In der Automobilserienlackierung hat es sich beispielsweise durchgesetzt, daß die gereinigten Rohkarossen aus verzinktem oder unverzinktem Stahl zunächst phosphatiert und anschließend mit einer passivierenden Nachspülung versehen werden, bevor durch kathodische Abscheidung ein sogenannter kathodischer Tauchlack (KTL) als Grundierungsschicht aufgebracht wird (vgl. Glasurit-Handbuch der Lacke und Farben, S. 454 ff., 11 Auflage, 1984, Curt R. Vincentz Verlag Hannover). Dabei ist der Passivierungsschritt ein notwendiger Verfahrensbestandteil.

Dieses bis heute so betriebene, prinzipielle Verfahren ist in den vergangenen Jahren sowohl hinsichtlich der Zusammensetzung von Phosphatierungs- und Passivierungsmaterialien als auch des KTL-Materials ständig verbessert worden. Beispielsweise sind Phosphatierungs- und Passivierungsmaterialien hinsichtlich ihrer technologischen Eigenschaften sowie auch unter ökologischen Gesichtspunkten weiterentwickelt worden, wie Horst Gehmecker in JOT, Heft 5, 1992, S. 42 bis 46 beschreibt.

Als Phosphatierungsvarianten sind beispielsweise die Eisenphosphatierung, Zinkphosphatierung, Niedrigzinkphosphatierung, Trikationphosphatierung, mangandotierte Phosphatierung, nickelfreie Phosphatierung und die nitritfreie Phosphatierung bekannt geworden, wie die umfangreiche Patentliteratur belegt. Dabei haben sich Phosphatierungslösungen mit einem Gehalt an Nickelionen als besonders vorteilhaft erwiesen. Handelsprodukte für die Phosphatierung werden beispielsweise von der Firma Henkel unter dem Namen Granodine^{R} vertrieben, z.B. Granodine 950 als Trikationssystem, Granodine 1990 als nitritfreies Trikationssystem oder Granodine 2700 als nickelfreies Trikationssystem.

Bei der Suche nach ökologisch und gesundheitlich unbedenklicheren Alternativen zu den ursprünglichen und auch heute noch gebräuchlichen chromathaltigen Passivierungslösungen wurden Erfolge erzielt, wie z.B. die Patentliteratur beweist. Beispiele dafür sind Passivierungslösungen auf Zirkonfluorid- oder organischer Basis. So vertreibt beispielsweise die Firma Henkel Produkte für die Passivierung unter dem Namen Deoxylyte^{R}, z.B. Deoxylyte 41 als Chromatsystem, Deoxylyte 54 NC als Zirkonfluoridsystem oder Deoxylyte 80 als System auf organischer Basis.

Beste Korrosionsschutzergebnisse werden nach heutigem Stand der Technik erhalten durch Kombination einer nickelhaltigen Phosphatierung gefolgt von einer chromathaltigen Passivierung als Vorbehandlung vor der Elektrotauchlackierung.

Elektrotauchlacke sind in großer Vielfalt bekannt. Sie enthalten im allgemeinen Vernetzungskatalysatoren, besonders in Form von Schwermetallverbindungen. In der Praxis haben insbesondere Blei- oder Zinnkatalysatoren Gebrauch gefunden. In neuerer Zeit sind auch bleifreie Elektrotauchlacke bekannt geworden, die jedoch hinsichtlich ihres Korrosionsschutzes verbesserungsbedürftig sind.

In der EP-A-0 138 193 wird die Verwendung von Salzen, speziell der Acetate, vorzugsweise zweiwertiger Metalle zur Verbesserung der Löslichkeit von Polymeren beschrieben. Als Metall wird unter anderem Wismut erwähnt. Verbesserte Lackfilmeigenschaften werden nicht beschrieben.

Die WO 93/24578 beschreibt durch Umesterung und/oder Umamidierung und/oder Umurethanisierung und/oder durch Reaktion endständiger Doppelbindungen vernetzbare KTL-Bindemittel, die Wismutsalze von aliphatischen Hydroxycarbonsäuren als ökologisch unbedenkliche Katalysatoren enthalten.

Aufgabe der Erfindung ist es, ein Verfahren zur Herstellung eines elektrophoretisch lackierten metallischen Substrats bereitzustellen, das einen hervorragenden Korrosionsschutz und eine ausgezeichnete Substrathaftung gewährleistet, und bei dem der Einsatz toxischer Bestandteile weitgehend vermieden werden kann.

Es hat sich gezeigt, daß diese Aufgabe überraschenderweise durch ein Verfahren zur Lackierung von metallischen Substraten durch Phosphatierungsbehandlung und elektrophoretische Tauchlackierung gelöst werden kann, das einen Gegenstand der Erfindung darstellt und das dadurch gekennzeichnet ist,
- daß man das metallische Substrat einer Phosphatierungs Vorbehandlung und anschließend einer Passivierungs-Nachbehandlung unterzieht, wobei man die Phosphatierung mit einer Phosphatierungslösung, die frei von Nickel ist und wobei man die Passivierung in Abwesenheit von sechswertigem Chrom durchführt, und
- daß man eine elektrophoretische Tauchlackierung des so behandelten Metallsubstrats durchführt, wobei man einen Elektrotauchlack verwendet, der Wismutlactat und/oder Wismutdimethylolpropionat enthalt und frei von Zinnverbindungen ist.

Ferner betrifft die Erfindung die nach dem erfindungsgemäßen Verfahren hergestellten Substrate.

Als metallische Substrate können Teile aus sämtlichen üblichen Metallen, beispielsweise die in der Automobilindustrie üblichen Metallteile eingesetzt werden. Beispiele sind Bauteile aus Aluminium, Magnesium oder deren Legierungen und insbesondere Stahl, z.B. unverzinkt oder mit Reinzink, Zink-Nickel-Legierung oder Zink-Eisen-Legierung verzinkt. Die verschiedenen Substrate können gemeinschaftlich an einem Werkstück vorhanden sein ( Gemischtbauweise).

Ebenso können bereits vorbeschichtete Metallteile oder Kunststoffteile an dem Werkstück vorhanden sein, die das erfindungsgemäße Verfahren unverändert durchlaufen, d.h. auf deren Oberfläche während des erfindungsgemäßen Verfahrens insbesondere keine Elektrotauchlackschicht abgeschieden wird.

Für das erfindungsgemäße Verfahren können an sich bekannte Phosphatierungslösungen eingesetzt werden. Es können beispielsweise solche verwendet werden, wie sie Horst Gehmecker in JOT, Heft 5, 1992, S. 42 bis 46 beschreibt. Es handelt sich beispielsweise um Zink-, Mangan- und/oder Eisenhaltige Phosphatierungsmaterialien. Im Stand der Technik haben sich in der industriellen Praxis Phosphatierungslösungen mit einem Gehalt an Nikkelionen als besonders vorteilhaft erwiesen. Im Rahmen der Erfindung hat es sich jedoch gezeigt, daß der Einsatz von toxischem Nickel vermieden werden kann, da er keine über die Verwendung der Wismutlactat und/oder Wismutdimethylolpropionat enthaltenden Elektrotauchlacke hinausgehenden Vorteile bringt.

Im erfindungsgemäßen Verfahren ist es bevorzugt zur Phosphatierung eine nicht nur nickelfreie, sondern bevorzugt auch kupferfreie Phosphatierungslösung zu verwenden.

Die Phosphatierungsschichten können in üblicher Weise, z.B. im Spritz- oder im Tauchverfahren aufgebracht werden. Aus diesen Lösungen wird auf der Oberfläche des Metallsubstrats eine dünne Schicht an Phosphatkristallen abgeschieden. Diese soll möglichst dicht und feinkörnig sein.

Anschließend erfolgt eine Nachbehandlung der Phosphatierungsschicht. Dies kann unter Verwendung üblicher bekannter Passivierungsmaterialien und -methoden erfolgen.

Beispiele für bekannte Passivierungsmaterialien sind die eingangs zum Stand der Technik erwähnten. Es werden dabei die von Verbindungen des sechswertigen Chroms freien Materialien verwendet. Besonders bevorzugt wird die Nachbehandlung mit Materialien durchgeführt, wie in der noch nicht veröffentlichten deutschen Patentanmeldung P 44 18 491.3 beschrieben. Zur Durchführung dieser Nachbehandlung werden phosphatierte Metallsubstrate nach der Phosphatierung und vor Aufbringung eines organischen Überzugs, z.B. eines Elektrotauchlacküberzugs mit einer wäßrigen Lösung behandelt, die 5 bis 10000 ppm gelöstes Titan, Vanadin, Molybdän, Silber, Zinn, Antimon und/ oder eines oder mehrerer der Elemente der Ordnungszahlen 57 bis 83 in Form anorganischer und/oder organischer Verbindungen enthält.

Die Behandlung mit der wäßrigen Lösung kann beispielsweise im Spritz- oder im Tauchverfahren bei einer Einwirkdauer von beispielsweise zwischen 1 und 120 Sekunden durchgeführt werden. Im Fall kompliziert geformter Metallsubstrate, wie z.B. Automobilkarossen, ist das Tauchverfahren bevorzugt.

Das Verfahren gemäß P 44 18 491.3 kann stromlos durchgeführt werden, bevorzugt ist es jedoch, daß die phosphatierten Metallsubstrate nach der Phosphatierung und vor Aufbringung des Elektrotauchlacküberzugs mit der wäßrigen Lösung behandelt werden und während dieser Behandlung zusätzlich als Kathode in einem Gleichstromkreis geschaltet sind. Diese Verfahrensweise führt zusätzlich zu einer Entfernung störender Anionen aus der Phosphatschicht. Bevorzugt wird mit einer Gleichspannung im Bereich von 3 bis 100 V, bevorzugt 5 bis 50 V, gearbeitet, wobei Stromdichten von 0,1 bis 10 A/m² zum Einsatz kommen, wobei der Stromfluß während der gesamten Eintauchdauer bestehen kann oder der Strom nur während eines Teils der Eintauchdauer fließt. Dabei kann die Stromstärke während des Stromflusses konstant gehalten werden oder die Stromstärke wird variiert.

Als wäßrige Lösungen dienen solche, die 5 bis 10000 ppm, bevorzugt über 10 und unter 6000 ppm, gelöstes Titan, Vanadin, Molybdän, Silber, Zinn, Antimon und/oder Elemente der Ordnungszahlen 57 bis 83 in Form anorganischer und/oder organischer Verbindungen enthalten, berechnet als Element. Bevorzugt enthalten sie Titan, Vanadin, Molybdän, Silber und/oder Elemente der Ordnungszahlen 57 bis 83 mit Ausnahme von Quecksilber, Thallium und Blei. Besonders bevorzugt sind die Elemente der Ordnungszahlen 57 bis 83 enthalten mit Ausnahme von Quecksilber, Thallium und Blei, wobei Wismut am meisten bevorzugt ist. Die wäßrigen Lösungen können 5 bis 10000 ppm, bevorzugt zwischen 10 und 6000 ppm mehrerer der vorstehend genannten Elemente im Gemisch oder bevorzugt nur eines dieser Elemente in gelöster Form enthalten.

Die anorganischen und/oder organischen Verbindungen der vorstehend genannten Elemente sind gut wasserlöslich oder sie besitzen eine ausreichende Wasserlöslichkeit, um als Quelle zur Aufrechterhaltung einer Konzentration von 5 bis 10000 ppm der vorstehend genannten Elemente in den wäßrigen Lösungen eingesetzt werden zu können. In diesem Fall liegen die in den wäßrigen Lösungen eingesetzten Verbindungen als feinverteilte kolloidale Lösung oder Dispersion vor und besitzen eine Depotwirkung für die entsprechenden Elemente.

Als anorganische oder organische Verbindungen sind anorganische oder organische Komplexverbindungen von Titan, Vanadin, Molybdän, Silber, Zinn, Antimon und/oder Elementen der Ordnungszahlen 57 bis 83 geeignet. Als Beispiel für einen chelatbildenden Liganden sei Acetylaceton genannt. Es sind jedoch auch andere Komplexbildner mit einer oder mehreren komplexbildenden Gruppe möglich. Bevorzugte anorganische oder organische Verbindungen sind jedoch die entsprechenden Salze anorganischer oder bevorzugt organischer Säuren. Beispiele für Salze anorganischer Säuren sind Chloride, Sulfate und Nitrate. Als organische Säuren dienen beispielsweise Mono- oder Polycarbonsäuren, wie z.B. aromatische, araliphatische und aliphatische Mono- oder Dicarbonsäuren. Bevorzugt sind die Salze von Monocarbonsäuren, wie beispielsweise die Benzoate, Formiate, Acetate, Propionate, Octoate, Neodekanoate. Als besonders geeignet haben sich die Salze von Hydroxycarbonsäuren und darunter die der aliphatischen Hydroxycarbonsäuren erwiesen. Beispiele hierfür sind die Salicylate, 4-Hydroxybenzoate, Lactate, Dimethylolpropionate.

Wäßrige Medien, die 5 bis 10000 ppm, bevorzugt zwischen 10 und 6000 ppm, gelöstes Wismut enthalten, sind am meisten bevorzugt. Dazu wird Wismut, lactat und/oder Wismutdimethylolpropionat eingesetzt.

Erfindungsgemäß kann das Substrat nach dem Phosphatieren und Nachbehandeln beispielsweise getrocknet und der nachfolgenden Elektrotauchlackierung zugeführt werden.

Als Elektrotauchlacke können beim erfindungsgemäßen Verfahren an sich bekannte, an der Anode abscheidbare Elektrotauchlacke oder bevorzugt kathodisch abscheidbare Elektrotauchlacke verwendet werden, die frei von Zinnverbindungen sind und denen Wismutlactat und/oder Wismutdimethylolpropionat zugesetzt werden. Sie unterliegen keiner Beschränkung. Sie können die üblichen Additive und Katalysatoren enthalten. Eine bevorzugte Ausführungsform ist jedoch frei von Chrom- und/oder Bleiverbindungen. Es sollen umwelt- oder gesundheitsgefährdende Metallverbindungen vermieden werden.

Die im erfindungsgemäßen Verfahren einsetzbaren Elektrotauchlacke sind wäßrige Überzugsmittel mit einem Festkörper von beispielsweise 10 - 20 Gew.-%. Dieser besteht aus üblichen Bindemitteln, die ionische oder in ionische Gruppen überführbare Substituenten sowie zur chemischen Vernetzung fähige Gruppen tragen, sowie gegebenenfalls Pigmenten und/oder Füllstoffen und weiteren Additiven. Die ionischen Gruppen können anionische oder in anionische Gruppen überführbare Gruppen, z.B. -COOH-Gruppen oder kationische oder in kationische Gruppe überführbare basische Gruppen, z.B. Amino-, Ammonium-, z.B. quartäre Ammonium-, Phosphonium- und/oder Sulfonium-Gruppen sein. Bevorzugt sind Bindemittel mit basischen Gruppen. Besonders bevorzugt sind stickstoffhaltige basische Gruppen, wie Aminogruppen. Diese Gruppen können quarternisiert vorliegen oder sie werden mit einem üblichen Neutralisationsmittel, z.B. einer organischen Monocarbonsäure, wie z.B. Milchsäure, Ameisensäure, Essigsäure, wie dem Fachmann geläufig, in ionische Gruppen überführt.

Beispiele für erfindungsgemäß einsetzbare an ionische Gruppen enthaltende anodisch abscheidbare Elektrotauchlack-Bindemittel und Lacke (ATL) sind in der DE-A-28 24 418 beschrieben. Es handelt sich beispielsweise um Bindemittel auf Basis von Polyestern, Epoxidharzestern, Poly(meth)acrylaten, Maleinatölen oder Polybutadienölen mit einem Gewichtsmittel der Molmasse von beispielsweise 300 - 10000 und einer Säurezahl von 35 - 300 mg KOH/g. Die Bindemittel tragen -COOH, -SO₃H und/oder -PO₃H₂-Gruppen. Die Harze können nach Neutralisation von mindestens einem Teil der sauren Gruppen in die Wasserphase überführt werden. Die Lacke können auch übliche Vernetzer enthalten, z.B. Triazinharze, Vernetzer, die umesterungs- und/oder umamidierungsfähige Gruppen enthalten oder blokkierte Polyisocyanate.

Bevorzugt sind jedoch kathodische Elektrotauchlacke (KTL) auf Basis kationischer bzw. basischer Bindemittel. Solche basischen Harze sind beispielsweise primäre, sekundäre und/oder tertiäre Aminogruppen enthaltende Harze, deren Aminzahlen z.B. bei 20 bis 250 mg KOH/g liegen. Das Gewichtsmittel der Molmasse (Mw) der Basisharze liegt bevorzugt bei 300 bis 10000. Beispiele für solche Basisharze sind Aminoacrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige und/oder umamidierungsfähige Gruppen enthalten.

Beispiele für in kathodischen Tauchlack (KTL)-Bädern eingesetzte Basisharze und Vernetzer, die erfindungsgemäß verwendet werden können, sind in der EP-A-0 082 291, EP-A-0 234 395, EP-A-0 209 857, EP-A-0 227 975, EP-A-0 178 531, EP-A-0 333 327, EP-A-0 310 971, EP-A-0 456 270, US 3 922 253, EP-A-0 261 385, EP-A-0 245 786, DE 33 24 211, EP-A-0 414 199, EP-A-0 476 514 beschrieben. Diese Harze können allein oder im Gemisch eingesetzt werden.

Im erfindungsgemäßen Verfahren hat sich der Einsatz von KTL-Bädern gemäß EP-A-0 414 199 und solcher auf Basis von Bindemitteln gemäß EP-A-0 234 395 besonders bewährt.

Der Mengenanteil des Wismutlactats und/oder des Wismutdimethylolpropionats im erfindungsgemäß eingesetzten Elektrotauchlack beträgt bevorzugt 0,1 bis 5 Gew.%, besonders bevorzugt 0,5 bis 3,0 Gew.-%, berechnet als Wismut und bezogen auf den Bindemittelfestkörper des Elektrotauchlackbades.

Die Einarbeitung des Wismutlactats und/oder des Wismutdimethylolpropionats in den Elektrotauchlack kann auf verschiedene Weise erfolgen. Beispielsweise kann die organische Wismutverbindung vor Zugabe wesentlicher Mengen von Wasser als Verdünnungsmittel der neutralisierten Bindemittellösung bei erhöhter Temperatur zugegeben und anschließend unter Rühren homogenisiert werden. Im Falle von durch Säuren neutralisierten Bindemitteln kann die Wismutverbindung beispielsweise bei 60 bis 80°C portionsweise zugegeben und anschließend unter Rühren, z.B. bei 60 bis 100°C, vorzugsweise bei 60 bis 70°C, mehrere Stunden, vorzugsweise 4 bis 8 Stunden homogenisiert werden. Bei Verwendung von Hydroxycarbonsäuren, wie z.B. Milchsäure oder Dimethylolpropionsäure, als Neutralisationsmittel für die Bindemittel kann alternativ auch mit den entsprechenden Mengen an Wismutoxid oder -hydroxid gearbeitet werden, wobei das entsprechende Wismutsalz in situ gebildet wird. Dabei wird vorteilhaft die Säuremenge gegenüber dem erstgenannten Verfahren um den zur Salzbildung notwendigen Anteil angepaßt.

Weiterhin ist die Einarbeitung der Wismutverbindungen in den Elektrotauchlack z.B. auch als Bestandteil von üblichen Pigmentpasten möglich. Ebenso können die Wismutverbindungen der Bindemitteldispersion oder dem Elektrotauchlack nachträglich zugesetzt werden. Es ist jedoch darauf zu achten, daß eine gleichmäßige Verteilung im Elektrolauchlackbad vorliegt.

Zusätzlich zu den Basisharzen und gegebenenfalls vorhandenem Vernetzer sowie dem erfindungswesentlichen Anteil an Wismutlactat und/oder Wismutdimethylolpropionat kann das Elektrotauchlack (ETL)-Überzugsmittel Pigmente, Füllstoffe und/oder lackübliche Additive enthalten. Als Pigmente kommen die üblichen anorganischen und/oder organischen Pigmente in Frage. Beispiele sind Ruß, Titandioxid, Eisenoxid, Kaolin, Talkum oder Siliciumdioxid. Es ist auch möglich, übliche Korrosionsschutzpigmente zu verwenden. Beispiele dafür sind Zinkphosphat, Bleisilikat oder organische Korrosionsinhibitoren. Die Art und Menge der Pigmente richtet sich nach dem Verwendungszweck der Überzugsmittel. Sollen klare Überzüge erhalten werden, so werden keine oder nur transparente Pigmente, wie z.B. mikronisiertes Titandioxid oder Siliciumdioxid eingesetzt. Sollen deckende Überzüge appliziert werden, so sind bevorzugt farbgebende Pigmente im Elektrotauchlackbad enthalten.

Die Pigmente können zu Pigmentpasten dispergiert werden, z B. unter Verwendung von bekannten Pastenharzen. Solche Harze sind dem Fachmann geläufig. Beispiele für in KTL-Bädern verwendbare Pastenharze sind in der EP-A-0 183 025 und in der EP-A-0 469 497 beschrieben.

Als Additive sind die üblichen Additive für ETL-Überzugsmittel möglich. Beispiele dafür sind Netzmittel, Neutralisationsmittel, Verlaufsmittel, Katalysatoren, Antischaummittel sowie übliche in Überzugsmitteln verwendete Lösemittel.

Beim erfindungsgemäßen Verfahren wird das metallische Substrat gereinigt und danach einer nickelfreien und bevorzugt nickel- und kupferfreien Phosphatierungsvorbehandlung unterzogen. Die sich anschließende Nachbehandlung vermeidet die Verwendung von Materialien, die Verbindungen des sechswertigen Chroms enthalten. Derartige phosphatierte und nachbehandelte Bleche für Versuchszwecke sind handelsüblich und werden z.B. von der Firma Chemetall vertrieben.

Das phosphatierte und nachbehandelte Substrat kann danach getrocknet werden, oder es wird direkt der Elektrotauchlackierung unterzogen. Nach der Beschichtung mit dem wismuthaltigen Elektrotauchlack wird der Überzug durch Einbrennen vernetzt. Bei Verwendung der erfindungsgemäß aufgebrachten Lackierung als Grundierung, können Folgeschichten aufgebracht werden.

Man erhält nach dem erfindungsgemäßen Verfahren eine Lackschicht mit ausgezeichneter Haftung zum Untergrund und hervorragendem Korrosionsschutz. Das erfindungsgemäße Verfahren bietet den Vorteil den Einsatz toxischer Metallverbindungen zu vermeiden. Bei bisherigen Verfahren war es üblich und notwendig zur Erzielung maximaler Korrosionsschutzeigenschaften die Phosphatierung in Anwesenheit von Nickelverbindungen durchzuführen und die Nachbehandlung möglichst in Anwesenheit von Chrom(VI)-Verbindungen durchzuführen. Durch die erfindungsgemäße Verfahrensweise läßt sich der Einsatz von Nickelverbindungen im Phosphatierungsmittel vermeiden, wobei die Nachbehandlung in Abwesenheit von Chrom(VI) durchgeführt wird. Hierdurch ergibt sich die Möglichkeit daß erfindungsgemäß sowohl Phosphatierungsmittel, Nachbehandlungsmittel als auch Elektrotauchlack frei von umweltgefährdenden Metaliverbindungen, wie Chrom(VI)-, Blei-, Nickel- oder Kupferverbindungen sind.

### Beispiel 1

### (Herstellung der Wismutsalze):

Deionisiertes Wasser und Säure werden vorgelegt und auf 70°C erwärmt. Unter Rühren wird handelsübliches Wismutoxid (Bi₂O₃) portionsweise zugegeben. Nach weiteren 6 Stunden Rühren bei 70°C wird der Ansatz auf ca. 20°C gekühlt und 12 Stunden ohne Rühren belassen. Schließlich wird der Niederschlag abtitriert, mit wenig Wasser und Ethanol gewaschen und bei einer Temperatur von 40 - 60°C getrocknet.

Folgende Salze werden unter Verwendung der angegebenen Mengenanteile hergestellt:
- Wismutlactat:: 466 Teile (1 Mol) Wismutoxid +
901 Teile (7 Mol) Milchsäure 70 % in Wasser
- Wismutdimethylolpropionat:: 466 Teile (1 Mol) Wismutoxid +
938 Teile (7 Mol) Dimethylolpropionsäure +
2154 Teile Wasser

### Beispiel 2

### (Herstellung eines Elektrotauchlacks):

a) 570 g eines Epoxidharzes auf Basis von Bisphenol A (Epoxidäquivalent 190) und 317 g Methoxypropanol werden auf 60°C erwärmt, innerhalb von 2 Stunden mit einer Mischung aus 116 g Ethylhexylamin und 163 g eines polymeren Amins (siehe unten) versetzt und bis zu einem MEQ-Wert von 2,06 reagiert. Anschließend werden 1330 g einer 75 %igen Lösung eines Bisphenol A-Epoxidharzes (Epoxidäquivalent 475) in Methoxypropanol zugegeben. In der Folge wird bei 60°C innerhalb einer Stunde eine Lösung von 189 Diethanolamin in 176 g Methoxypropanol zugegeben und die Reaktion bis zu einem MEQ-Wert von 1,57 geführt. Nach weiterer Zugabe einer Lösung von 78 g Diethylaminopropylamin in 54 g Methoxypropanol innerhalb einer Stunde wird bei 60°C bis zu einem MEQ-Wert von 1,46 reagiert. Die Temperatur wird auf 90°C und anschließend innerhalb einer weiteren Stunde auf 120°C gesteigert. Bei Erreichen einer Viskosität (GARDNER-HOLD; 6 g Harz + 4 g Methoxypropanol) von I - J wird mit Methoxypropanol auf einen Feststoffgehalt von 65 Gew.-% verdünnt. Das Produkt hat eine Aminzahl von 117 mg KOH/g und eine Hydroxylzahl von 323 mg KOH/g, jeweils auf den Feststoff bezogen.
   Das polymere Amin wird durch Umsetzung von 1 Mol Diethylentriamin mit 3,1 Mol 2-Ethylhexylglycidylether und 0,5 Mol eines Bisphenol A-Epoxidharzes (Epoxidäquivalent 190) in 80 %iger Methoxypropanol-Lösung hergestellt. Das Produkt weist eine Viskosität (DIN 53 211/20°C; 100 g Harz + 30 g Methoxypropanol) von 60 bis 80 Sekunden auf.
b) 134 g Trimethylolpropan werden mit 160 g Malonsäurediethylester versetzt und bis zum Destillationsbeginn (ca. 140- 150°C) erhitzt. Bei steigender Temperatur (bis 180°C) werden 46 g Ethanol abdestilliert. Nach beendeter Reaktion wird mit 128 g Diethylenglykoldimethylether verdünnt und auf 60°C gekühlt. Anschließend werden 264 g eines Reaktionsproduktes aus 1 Mol Toluylendiisocyanat und 1 Mol Ethylenglykolmonoethylether innerhalb von 4 Stunden zugegeben und bei 60°C auf einen NCO-Gehalt unter 0,02 Milliäquivalent pro g Probe reagiert.
   Das erhaltene Produkt hat einen Feststoffgehalt von 80 ± 2 Gew.-% (30 Minuten 120°C) eine Viskosität nach GARDNER - HOLD (10 g Produkt + 2 g Diethylenglykoldimethylether) von K und einen Brechungsindex n 20/d von 1,4960.
c) Die unter a) und b) erhaltenen Produkte werden im Verhältnis 70 : 30 (bezogen auf Feststoffgehalt) gemischt. Anschließend wird Milchsäure zugegeben, wobei deren zur Erreichung einwandfreier Wasserlöslichkeit erforderliche Menge in Vorversuchen ermittelt wurde. Es wird auf 70°C erhitzt und innerhalb von zwei Stunden Wismutdimethylolpropionat unter Rühren portionsweise in einer solchen Menge zugegeben, daß 1,5 Gew.-% Wismut, bezogen auf Feststoffgehalt, im Ansatz vorhanden sind. Anschließend wird noch 6 Stunden bei 60 - 70°C gerührt und zuletzt mit Methoxypropanol auf einen Feststoffgehalt von 65 Gew.-% verdünnt.
d) Entsprechend der Formulierung 100 Teile Bindemittel, 39,5 Teile Titandioxid und 0,5 Teile Ruß wird ein kathodisch abscheidbarer Elektrotauchlack mit 18 Gew.-% Feststoffgehalt in üblicher Weise hergestellt.

### Beispiel 3

### (Herstellung von KTL-Dispersionen)

a) 832 Teile des Monocarbonats eines Epoxidharzes auf der Basis von Bisphenol A (Handelsprodukt Epicote 828) werden mit 830 Teilen eines handelsüblichen Polycaprolactonpolyols (Handelsprodukt CAPA 205) und 712 Teilen Diglykoldimethylether gemischt und bei 70 bis 140°C mit ungefähr 0,3 % BF₃-Etherat zur Reaktion gebracht bis eine Epoxidzahl von 0 erreicht wird. Zu diesem Produkt (Festkörper 70 %, 2 Äquivalente Carbonat) werden bei 40 bis 80°C in Gegenwart von 0,3% Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol unter Zugabe von 0,3 % Benzyltrimethylammoniumhydroxid (Triton B) mit einem NCO-Gehalt von ca. 12,8 % gegeben. Es wird bis zu einem NCO-Wert von ca. 0 umgesetzt und dann mit Diglykoldimethylether auf ca. 70 % Festkörper eingestellt.
b) Zu 1759 Teilen eines Biscarbonats eines Epoxidharzes auf der Basis von Bisphenol A (Handelsprodukt Epicote **1001**^{(R)}) werden bei 60 bis 80°C 618 Teile eines Umsetzungsproduktes aus 348 Teilen Toluylendiisocyanat (80 % 2,4-Isomeres; 20 % 2,6-Isomeres) mit 274 Teilen 2-Ethylhexanol mit einem Rest-NCO-Gehalt von 12,8 % langsam zugegeben unter Katalyse von 0,3 % eines nicht-ionischen Emulgators (Triton B^{(R)}). Die Reaktion wird bis zu einem NCO-Wert von ca. 0 fortgesetzt. Das Produkt hat einen Feststoffgehalt von 70 %. Zu 860 Teilen Bishexamethylentriamin in 2315 Teilen Methoxypropanol gelöst werden bei einer Temperatur von 20 bis 40°C 622 Teile des Umsetzungsproduktes aus 137 Teilen 2-Ethylhexanol mit 174 Teilen Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt wird im Vakuum auf einen Festkörper von ca. 85 % abdestilliert.
c1) Es wird mit 30 mmol Ameisensäure/100 g Harz neutralisiert. Danach wird auf 70°C erhitzt und innerhalb von zwei Stunden Wismutlactat unter Rühren portionsweise in einer solchen Menge zugegeben, daß 1,5 Gew-% Wismut, bezogen auf Feststoffgehalt im Ansatz vorhanden sind. Anschließend wird noch 6 Stunden bei 60 bis 70°C gerührt. Nach Abkühlen wird mit deionisiertem Wasser in eine Dispersion mit einem Festkörper von 40 Gew.-% überführt.
c2) c1) wird wiederholt mit dem Unterschied, daß nach Zugabe der Ameisensäure kein Erhitzen und keine Zugabe von Wismutsalz erfolgt.

### Herstellung von Pigmentpasten

### Beispiel 4

Zu 223 Teilen des Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 374 Teile deionisiertes Wasser gegeben.

Dazu werden 5 Teile Ruß, 5 Teile pyrogene Kieselsäure, 25 Teile Dibutylzinnoxidpulver, 38 Teile Bleisilikat und 560 Teile Titandioxid gegeben. Mit deionisiertem Wasser wird auf ca. 50 % Festkörper eingestellt und auf einer Perlmühle vermahlen. Es entsteht eine stabile Pigmentpaste.

### Beispiel 5

Beispiel 4 wird wiederholt ohne Zusatz von Bleisilikat.

### Beispiel 6

Beispiel 5 wird wiederholt ohne Zusatz von Dibutylzinnoxid.

### Beispiel 7

### (Herstellung eines wismuthaltigen KTL)

Zu 815,5 Teilen der Dispersion aus Beispiel 3 c1) werden 4,5 Teile Ameisensäure (50 %) und 1760 Teile deionisiertes Wasser gegeben. Unter gutem Rühren werden 420 Teile Pigmentpaste nach Beispiel 6 zugesetzt.

### Beispiel 8

### (Herstellung eines blei- und zinnhaltigen KTL)

Zu 815,5 Teilen der Dispersion aus Beispiel 3 c2) werden 4,5 Teile Ameisensäure (50 %) und 1760 Teile deionisiertes Wasser gegeben. Unter gutem Rühren werden 420 Teile Pigmentpaste nach Beispiel 4 zugesetzt.

### Beispiel 9

### (Herstellung eines zinnhaltigen KTL)

Beispiel 8 wird wiederholt mit dem Unterschied, daß 420 Teile der Pigmentpaste aus Beispiel 5 eingesetzt werden.

### Beispiel 10

### (Herstellung eines blei- und zinnhaltigen KTL)

Gemäß EP-A-0 414 199-A2, Tabelle 3, Bindemittelkombination 2 wird ein pigmentierter Kataphoreselack mit einem Festkörpergehalt von 18 Gew.-% hergestellt.

### Beispiel 11

### (Herstellung eines zinnhaltigen KTL)

Beispiel 10 wird wiederholt ohne Zusatz von basischem Bleisilikat. Dabei enthält der Kataphoreselack 0,5 Teile Ruß, 35,5 Teile Titandioxid, 5 Teile Hexylglykol, jeweils bezogen auf Festharz.

Die Lacke aus Beispiel 2 und 7 bis 11 werden durch kathodische Abscheidung auf einseitig elektrolytisch verzinkte Stahlbleche (ST 1405) mit jeweils unterschiedlicher Vorbehandlung (zu Versuchszwecken von der Firma Chemetall vertriebene sogenannte "Bonder"-Bleche, vgl. nachstehende Auflistung) in 20 µm Trockenschichtdicke appliziert und 10 min. bei 175°C (Objekttemperatur) eingebrannt. Nach halbseitigem Abkleben der nicht-verzinkten Seite wird ein handelsüblicher Füller in 35 µm Trockenschichtdicke beidseitig aufgespritzt und 15 min. bei 165°C (Objekttemperatur) eingebrannt. Danach wird beidseitig ein für die Automobilserienlackierung geeigneter Einschichtdecklack durch Spritzen in 40 µm Trockenschichtdicke aufgetragen und 30 min. bei 130°C (Objekttemperatur) eingebrannt. Danach wird die Abklebung entfernt.

Auflistung der unterschiedlichen Vorbehandlungen:
- A Bonder^{R} 26/60/0C: (Nickelhaltige Trikationspritzphosphatierung, chromsäurepassiviert)
- B Bonder^{R} 26/D6800/OC: (Nickelhaltige Trikationspritzphosphatierung, passiviert mit Zirkonfluorid)
- C Bonder^{R} 2640/60/0C: (Nickelfreie Trikationtauchphosphatierung, chromsäurepassiviert)
- D Bonder^{R} 2640/D6800/0C: (Nickelfreie Trikationtauchphosphatierung, passiviert mit Zirkonfluorid)

### Durchgeführte Prüfungen:

1. Prüfung des Korrosionsschutzes nach VDA-Richtlinie 621-415 auf der nicht-verzinkten Seite, Prüfdauer 10 Zyklen. Angabe der Unterwanderung nach DIN 53 167 in mm (vgl. Tabelle 1).
2. Prüfung der Haftung am Serienaufbau auf der verzinkten Seite nach DIN 53 151 vor und nach Belastung mit 240 Stunden Konstantklima nach DIN 50 017 (vgl. Tabelle 2).

**Tabelle 1**

| Korrosionsschutzprüfung, Angaben in mm | | | | |
|---|---|---|---|---|
| | A | B | C | D |
| Lackbeispiel | | | | |
| 2 | 1,3 | 1,3 | 1,3 | 1,3 |
| 7 | 1,2 | 1,2 | 1,2 | 1,2 |
| 8 | 1,3 | 1,3 | 1,3 | 1,5 |
| 9 | 1,2 | 1,3 | 1,2 | 1,8 |
| 10 | 1,1 | 1,1 | 1,1 | 1,4 |
| 11 | 1,4 | 1,4 | 1,4 | 1,7 |

**Tabelle 2**

| Prüfung der Haftung durch Gitterschnitt vor (v) und nach (n) Belastung im Konstantklima | | | | | | | | |
|---|---|---|---|---|---|---|---|---|
| | A | A | B | B | C | C | D | D |
| | v | n | v | n | v | n | v | n |
| Lackb | | | | | | | | |
| 2 | 1 | 1 | 1 | 1 | 1 | 1 | 1 | 1 |
| 7 | 1 | 1 | 1 | 1 | 1 | 1 | 1 | 1 |
| 8 | 1 | 1 | 1 | 1 | 1 | 1 | 1 | 2 |
| 9 | 1 | 1 | 1 | 1 | 1 | 1 | 1 | 2 |
| 10 | 1 | 1 | 1 | 1 | 1 | 1 | 1 | 2 |
| 11 | 1 | 1 | 1 | 1 | 1 | 1 | 1 | 2 |

Ein Vergleich der nach dem erfindungsgemäßen Verfahren durchgeführten Beispiele 2 und 7 (jeweils Versuch D) zeigt, daß mit der erfindungsgemäßen Arbeitsweise, die eine nickelfreie Phosphatierung und eine Chrom-VI-freie Passivierung und Verwendung von Wismutlactat und/oder Wismutdimethylolpropionat enthaltenden zinnfreien Elektrotauchlacken einbezieht, die gleichen guten Ergebnisse erhalten werden, wie sie bisher mit Nickel und Chrom(VI) enthaltenden Materialien erzielt wurden.

## Patentansprüche

1. Verfahren zur Lackierung von metallischen Substraten durch Phosphatierungsbehandlung und elektrophoretische Tauchlackierung, **dadurch gekennzeichnet,**
- **daß** man das metallische Substrat einer PhosphatierungsVorbehandlung und anschließend einer Passivierungs-Nachbehandlung unterzieht, wobei man die Phosphatierung mit einer Phosphatierungslösung, die frei von Nickel ist und wobei man die Passivierung in Abwesenheit von sechswertigem Chrom durchführt, und
- **daß** man eine elektrophoretische Tauchlackierung des so behandelten Metallsubstrats durchführt, wobei man einen Elektrotauchlack verwendet, der Wismutlactat und/oder Wismutdimethylolpropionat enthält und frei von Zinnverbindungen ist.

2. Verfahren nach Anspruch 1, **dadurch gekennzeichnet, daß** man die Phosphatierung mit einer Zink-, Mangan- und/oder Eisen-haltigen Phosphatierungslösung durchführt.

3. Verfahren nach einem der vorhergehenden Ansprüche, **dadurch gekennzeichnet, daß** man die Passivierung mit einer wäßrigen Lösung durchführt, die 5 bis 10000 ppm gelöstes Titan, Vanadin, Molybdän, Silber, Zinn, Antimon und/oder eines oder mehrerer der Elemente der Ordnungszahlen 57 bis 83 in Form anorganischer und/oder organischer Verbindungen enthält.

4. Verfahren nach einem der vorhergehenden Ansprüche, **dadurch gekennzeichnet, daß** man einen Elektrotauchlack verwendet, der Wismutlactat und/oder Wismutdimethylolproprionat in einem Mengenanteil von 0,1 - 5 Gew.-%, berechnet als Wismut und bezogen auf den Bindemittelfestkörper im Elektrotauchlack enthält.

5. Verfahren nach einem der vorhergehenden Ansprüche, **dadurch gekennzeichnet, daß** man die elektrophoretische Tauchlackierung mit einem kathodischen Elektrotauchlack auf der Basis von selbstvernetzenden oder fremdvernetzenden Bindemitteln mit primären, sekundären und/oder tertiären Aminogruppen, entsprechend einer Aminzahl von 20 bis 250 mg KOH/g und einem Gewichtsmittel der Molmasse (Mw) von 300 bis 10000, deren Aminogruppen zumindest teilweise quarternisiert und/oder neutralisiert vorliegen, durchführt.

6. Verfahren nach einem der vorhergehenden Ansprüche, **dadurch gekennzeichnet, daß** es zur Lackierung von Kraftfahrzeugkarosserien und deren Teilen verwendet wird.

7. Verfahren nach einem der vorhergehenden Ansprüche, **dadurch gekennzeichnet, daß** es zur Grundierung von Kraftfahrzeugkarosserien und deren Teilen innerhalb einer Mehrschichtlackierung verwendet wird.

8. Verfahren nach einem der vorhergehenden Ansprüche, **dadurch gekennzeichnet, daß** es zur Lackierung von Metallsubstraten verwendet wird, die aus verschiedenen Metallen zusammengesetzt sind.

9. Metallsubstrate in der Form von metallischen Werkstücken, die nach dem Verfahren eines der Ansprüche 1 bis 8 behandelt wurden.

## Claims

1. A process for lacquering metallic substrates by phosphating treatment and electrophoretic dip coating, **characterised in that**
- the metallic substrate is subjected to a preliminary phosphating treatment and subsequently to a passivating aftertreatment, the phosphating being carried out using a phosphating solution which is free from nickel and the passivation being carried out in the absence of hexavalent chromium, and
- an electrophoretic dip coating of the metal substrate thus treated is carried out using an electrophoretic lacquer which contains bismuth lactate and/or bismuth dimethylolpropionate and is free from tin compounds.

2. A process according to claim 1, **characterised in that** the phosphating is carried out using a phosphating solution containing zinc, manganese and/or iron.

3. A process according to one of the preceding claims, **characterised in that** the passivation is carried out using an aqueous solution which contains 5 to 10000 ppm of dissolved titanium, vanadium, molybdenum, silver, tin, antimony and/or one or more of the elements having the atomic numbers 57 to 83 in the form of inorganic and/or organic compounds.

4. A process according to one of the preceding claims, **characterised in that** an electrophoretic lacquer is used which contains bismuth lactate and/or bismuth dimethylolpropionate in a quantity of 0.1 to 5 wt.%, calculated as bismuth and based on the binder solids content in the electrophoretic lacquer.

5. A process according to one of the preceding claims, **characterised in that** the electrophoretic dip coating is carried out using a cathodic electrophoretic lacquer based on binders which cross-link naturally or in the presence of cross-linking agents and contain primary, secondary and/or tertiary amino groups, corresponding to an amine value of from 20 to 250 mg KOH/g and a weight average molar mass (Mw) of from 300 to 10000, the amino groups of which are at least partly quaternised and/or neutralised.

6. A process according to one of the preceding claims, **characterised in that** it is used for lacquering car bodies and parts thereof.

7. A process according to one of the preceding claims, **characterised in that** it is used for priming car bodies and parts thereof in a multilayer lacquering.

8. A process according to one of the preceding claims, **characterised in that** it is used for lacquering metal substrates which are composed of different metals.

9. Metal substrates in the form of metallic workpieces, which have been treated by the process according to one of claims 1 to 8.

## Revendications

1. Procédé pour revêtement de support métalliques par un traitement de phosphatation et une application de revêtement par électrophorèse en immersion, **caractérisé en ce que**
- on soumet le support métallique à un traitement préalable de phosphatation puis à un traitement complémentaire de passivation, la phosphatation étant réalisée avec une solution exempte de nickel et la passivation réalisée en l'absence de chrome hexavalent,
et
- an applique un revêtement par électrophorèse en immersion sur le support métallique traité en utilisant un produit de revêtement pour électrodéposition qui contient du lactate de bismuth et/ou du diméthylolpropionate de bismuth et est exempt de dérivé de l'étain.

2. Procédé selon revendication 1,
**caractérisé en ce que** l'on procède à la phosphatation avec une solution de phosphatation contenant du zinc, du manganèse et/ou du fer.

3. Procédé selon une des revendications qui précèdent, **caractérisé en ce que** l'on procède à la passivation avec une solution aqueuse contenant de 5 à 10 000 ppm de titane, de vanadium, de molybdène, d'argent, d'étain, d'antimoine et/ou d'un ou plusieurs des éléments de numéros atomiques 57 à 83, à l'état de dérivés minéraux et/ou organiques et en solution.

4. Procédé selon l'une des revendications qui précèdent,
**caractérisé en ce que** l'on utilise un produit de revêtement par électrodéposition contenant du lactate de bismuth et/ou du diméthylolpropionate de bismuth en quantité correspondant à une proportion de 0,1 à 5 % en poids de bismuth, par rapport aux matières solides du liant du produit de revêtement par électrodéposition.

5. Procédé selon une des revendications qui précèdent,
**caractérisé en ce que** l'on procède à l'application d'un revêtement par électrophorèse en immersion à l'aide d'un produit de revêtement pour électrodéposition cathodique à base de liants autoréticulants ou réticulant sous l'action d'un agent étranger, qui contiennent des groupes amino primaires, secondaires et/ou tertiaires, en quantité correspondant à un indice d'amine de 20 à 250 mg de KOH/g et ont un poids moléculaire moyen, moyenne en poids, Mw, de 300 à 10 000, les groupes amino étant, en partie au moins, quaternisés et/ou neutralisés.

6. Procédé selon une des revendications qui précèdent,
**caractérisé en ce qu'**on l'exploite pour l'application de revêtements sur des carrosseries de véhicules ou des parties de carrosseries de véhicules.

7. Procédé selon une des revendications qui précèdent,
**caractérisé en ce qu'**on l'exploite pour l'application de couches d'apprêt sur des carrosseries de véhicules ou leurs parties, dans une opération globale d'application de revêtements à plusieurs couches.

8. Procédé selon une des revendications qui précèdent, **caractérisé en ce qu'**on l'exploite pour l'application de revêtements sur des supports métalliques constitués de divers métaux.

9. Supports métalliques, sous la forme de pièces métalliques qui ont été traitées par le procédé de l'une des revendications 1 à 8.
